# EUROPÄISCHE PATENTSCHRIFT

(11) **EP 2 821 816 B1**
(45) Veröffentlichungstag und Bekanntmachung des Hinweises auf die Patenterteilung: **22.08.2018**
(21) Anmeldenummer: 13174498.9
(22) Anmeldetag: 01.07.2013
(51) Int. Cl.: G01V 3/15

(54) **Trag-/Führungsrohr für ein tragbares Suchgerät**
Supporting/guide tube for a portable search device
Tube de support/de guidage pour un appareil de recherche portable

(43) Veröffentlichungstag der Anmeldung: 07.01.2015
(73) Patentinhaber: Vallon GmbH, 72800 Eningen (DE)
(72) Erfinder: Vallon, Gerhard, 72800 Eningen (DE); Brucksch, Joachim, 72127 Kusterdingen (DE)
(74) Vertreter: Klocke, Peter

(56) Entgegenhaltungen:
- EP-A1- 0 884 609
- WO-A2-2006/044947
- US-A- 3 823 365
- US-A- 6 119 526
- US-A1- 2004 145 369
- US-A1- 2011 191 058

## Beschreibung

Die Erfindung betrifft ein tragbares Suchgerät zur Detektion von Magnetfeld beeinflussenden Objekten, mit einer Magnetfeldsonde und einer Elektronikeinheit, die die Messwerte der Magnetfeldsonde verarbeitet sowie zumindest optisch und/oder akustisch anzeigt, und mit einem Trag-/Führungsrohr mit einem vorderen Ende, an dem die die Magnetfeldsonde schwenkbar befestigt oder befestigbar ist, mit einem hinteren Ende, an dem ein Batteriefach angeordnet ist, mit einem Traggriff zum Führen des Trag-/Führungsrohres und mit einer Halterung für die Elektronikeinheit, wobei das Trag-/Führungsrohr mehrstückig als Teleskoptragrohr ausgebildet ist und mindestens ein vorderes Teleskoprohr und ein hinteres Teleskoprohr aufweist, die ineinander schiebbar und mittels einer Rohrspanneinrichtung aneinander festlegbar sind.

Magnetfeldmessgeräte und auch Eisendetektoren sind in vielfältigen Ausführungsformen aus dem gegenwärtigen Stand der Technik bekannt. Bekannte Eisendetektoren umfassen in der Regel eine stabförmige Magnetfeldsonde, die an einem vorderen Ende eines langen Trag-/Führungsrohres schwenkbar, insbesondere pendelfähig befestigt ist und eine Elektronikeinheit, die meist am Trag-/Führungsrohr fest oder lösbar montiert ist und die die von der Magnetfeldsonde ermittelten Messwerte verarbeitet zumindest optisch und/oder akustisch dem Benutzer des Eisendetektors anzeigt und optional zwischenspeichert. Das Trag-/Führungsrohr kann dabei eine Länge von 2 m und mehr aufweisen, wobei die Magnetfeldsonde eine typische Länge zwischen 60 und 120 cm besitzt. Damit ist die gesamte Messanordnung entsprechend sperrig und daher schwierig zu transportieren. Aus diesem Grund sind die Trag-/Führungsrohre von tragbaren Eisendetektoren häufig steckbar ausgebildet und weisen zwei oder mehr ineinander steckbare Rohrteile auf. Für den Transport können die auseinander genommen werden und die Magnetfeldsonde an das vordere Rohrteil des derart verkürzten Trag-/Führungsrohr herangeschwenkt werden. In der Regel ist zudem auch das an dem Trag-/Führungsrohr angebrachte Batteriefach, in dem die Batterien zum Betreiben der Elektronikeinheit angeordnet sind, für eine optimale Verkürzung des Trag-/Führungsrohres für den Transport hinderlich. Zur Behebung dieses Mangels sind von dem Trag-/Führungsrohr abnehmbare rohrförmige Batteriefächer bekannt, die jedoch einen vermehrten Arbeitsaufwand bei der Vorbereitung zum bzw. bei der Wiederinbetriebnahme nach dem Transport mit sich bringen. Bekannte Elektronikeinheiten sind häufig fest mit dem Trag-/Führungsrohr verbunden und weisen ein in ein Modulgehäuse eingebautes, gegenüber dem Modulgehäuse in der Ausrichtung nicht veränderbare Anzeigemittel, beispielsweise ein Zeigerinstrument, eine LED- bzw. LCD-Bargraphanzeige, eine LED-Kette oder ein elektronisches Display, neben den Anzeigemitteln angeordnete Bedien- und/oder Einstellelemente, elektrische Anschlüsse für die Magnetfeldsonde sowie einen elektrischen Steckverbinder zum Verbinden mit einem abgesetzten Batteriefach auf, in dem Batterien zum Betrieb der Elektronikeinheit angeordnet sind.

Zum Stand der Technik wird beispielhaft auf die Druckschriften DE 37 42 272 C2 und DE 297 00 808 U1 und EP 0 884 609 A1 verwiesen.

Die Offenlegungsschrift EP 0 884 609 A1 offenbart ein tragbares Suchgerät zur Detektion von Magnet beeinflussenden Objekten, das ein Metalldetektorgestänge mit einem Tragrohr aufweist, an dessen vorderen Ende eine schwenkbar gelagerte Spule und im Bereich des oberen Endes eine Elektronik, ein Handgriff sowie eine Armschale angeordnet sind, wobei eine gemeinsame Halterung für die Elektronik, den Handgriff und die Armschale vorgesehen ist, die wenigstens teilweise entlang dem Tragrohr bewegbar und an diesem verdrehsicher arretierbar ist, und wobei die Halterung eine Durchführung aufweist, in der das Tragrohr bei der Bewegung der Halterung entlang des Tragrohres geführt ist. Dabei ist das das Tragrohr als Teleskoptragrohr ausgebildet ist, das aus mehreren ineinander verschiebbaren Teleskopteilen besteht und in der gewünschten Länge einstellbar ist.

Ausgehend von dem vorstehend beschriebenen Stand der Technik liegt der Erfindung die Aufgabe zugrunde, ein gattungsgemäßes tragbares Suchgerät mit einem verbesserten Trag-/Führungsrohr mit Batteriefach vorzuschlagen, das für den Transport einfach verkürzbar ist und eine schnelle Wiederinbetriebnahme erlaubt.

Diese Aufgabe wird erfindungsgemäß durch ein Suchgerät mit den Merkmalen des Patentanspruchs 1 gelöst. Weitere vorteilhafte Ausführungsformen sind den rückbezogenen Patentansprüchen zu entnehmen.

Danach ist die Magnetfelssonde stabförmig ausgebildet, wobei das Trag-/Führungsrohrrohr eine kabellose abnehmbare und aufsteckbare Elektronikeinheit trägt, die einen Bildschirm mit Anzeigemitteln aufweist, der gelenkig mit einem Modulgehäuse der Elektronikeinheit verbunden ist, und von einer Nichtgebrauchsstellung, in der die Anzeigeseite des Bildschirms an dem Modulgehäuse flach anliegt, in eine Gebrauchsstellung, in der die Anzeigeseite des Bildschirms sichtbar ist und sich rückwärts geneigt weg von dem Modulgehäuse erstreckt, und umgekehrt, verschwenkbar ist. Dabei weist das Modulgehäuse der Elektronikeinheit eine Vorderseite auf, die ein Bedienfeld mit Bedienelementen und ein Freifeld zur Aufnahme des klappbaren Bildschirms in der Nichtgebrauchsstellung umfasst, wobei sich das Freifeld direkt neben dem Bedienfeld erstreckt und mindestens eine dem Bildschirm entsprechende Größe aufweist, so dass die Bedienelemente des Bedienfeldes auch bei an dem Freifeld in Anlage befindlichem Bildschirm nicht abgedeckt sind, Das Modulgehäuse weist zudem eine Rückseite auf, an der die elektrischen Anschlüsse zu einem Steckverbinder zusammengefasst angeordnet sind. Des Weiteren weist das Modulgehäuse der Elektronikeinheit Befestigungsmitteln zur lösbaren Fixierung an der Halterung auf, die an den Seitenflanken des Modulgehäuses angeordnet sind. Diese können an den Quer- und/oder Längsseitenflanken des Modulgehäuses angeordnet sein. Die die Halterung des Trag-/Führungsrohrs weist den Befestigungsmitteln der Elektronikeinheit zugeordnete Haltemittel und einen dem elektrischen Steckverbinder der Elektronikeinheit zugeordneten elektrischen Gegensteckverbinder auf, wobei die Elektronikeinheit beim Einsetzen in die Halterung automatisch mit der Halterung mechanisch und elektrisch koppelbar ist, und wobei der Steckverbinder der Elektronikeinheit mit dem Gegensteckverbinder der Halterung und die Befestigungsmittel der Elektronikeinheit mit den Haltemitteln der Halterung lösbar koppeln. Somit kann auf einfache und schnelle Weise eine sichere elektrische Verbindung zu den elektrischen Leitungen, die sich zu der Magnetfeldsonde und dem abgesetzten Batteriefach hin erstrecken, hergestellt werden. Eine Trennung der elektrischen Verbindung erfolgt ebenfalls automatisch, wenn die Elektronikeinheit von dem Halter abgenommen wird. Über die Befestigungsmitteln der Elektronikeinheit und die zugeordneten Haltemittel der Halterung kann auch mühelos eine sichere lösbare mechanische Verbindung zwischen der Elektronikeinheit der Halterung durchgeführt werden. Die Befestigungsmittel, die mit den Haltemitteln bei auf der Halterung angeordneter Elektronikeinheit zusammenwirken, fixieren die Elektronikeinheit zusätzlich zu der Fixierung über den elektrischen Steckverbinder nochmals mechanisch sicher lösbar. Für ein bequemes Abnehmen bzw. Aufstecken der Elektronikeinheit von/auf die Halterung können die Befestigungsmittel und die Haltemittel beispielsweise als Rastelemente einer Rastverbindung ausgebildet sein. Die Erfindung schließt auch sich nicht selbstständig miteinander verbindende Befestigungs- und Haltemittel ein, die beispielsweise manuell miteinander verschraubt, verspannt oder verriegelt werden.

Das Trag-/Führungsrohres ist als Teleskoptragrohr ausgebildet und weist mindestens ein vorderes Teleskoprohr und ein hinteres Teleskoprohr auf, die ineinander schiebbar und mittels einer Rohrspanneinrichtung aneinander festlegbar sind. Damit kann das teleskopierbare Trag-/Führungsrohres für einen problemlosen Transport einfach durch Zusammenschieben seiner Teleskoprohre verkürzt werden. Die Länge des zusammengeschobenen Teleskoptragrohres wird durch die Anzahl der verwendeten Teleskoprohre bestimmt.

Die Ausführungsform der Magnetfeldsonde und der Elektronikeinheit kann an sich beliebig gewählt werden, sie muss lediglich zur Adaptierung an das erfindungsgemäße teleskopierbare Trag-/Führungsrohr geeignet ausgebildet sein oder entsprechend modifiziert werden. Die Elektronikeinheit des Suchgerätes weist einen Bildschirm auf, an dem optische Anzeigemittel angeordnet sind und der gelenkig mit einem Modulgehäuse der Elektronikeinheit verbunden ist. In der Nichtgebrauchsstellung des Bildschirms liegt dessen Anzeigeseite an dem Modulgehäuse flach an, so dass die Anzeigemittel bei Nichtgebrauch geschützt sind. In der Gebrauchsstellung sind die Anzeigemittel der Anzeigeseite des Bildschirms gut sichtbar, indem der Bildschirm rückwärts geneigt ist. In der Gebrauchsstellung ist der Bildschirm beliebig in seiner Ausrichtung gegenüber dem Modulgehäuse neigbar, so dass unabhängig von der Größe des Benutzers für eine ergonomische Handhabung des Suchgerätes immer ein optimaler Blickwinkel auf die Anzeigemittel einstellbar ist. Dabei kann der Bildschirm stufenlos und/oder in definierten Stufen gegenüber dem Modulgehäuse verschwenkbar sein. Vorzugsweise ist die gelenkige Verbindung zwischen dem Bildschirm, der beispielsweise ein Zeigerinstrument, eine LED- bzw. LCD-Bargraph-Anzeige, eine LED-Kette oder ein elektronisches Display als Anzeigemittel aufweist, und dem Modulgehäuse derart ausgebildet, dass sich der Bildschirm mit bei Gebrauch des Suchgerätes nicht von selbst unerwünscht verstellen kann. Dazu können beispielsweise geeignete Hemm-, Rast- oder Blockiermittel vorgesehen sein.

In einer bevorzugten Ausführungsform des erfindungsgemäßen Suchgerätes mit teleskopierbaren Trag-/Führungsrohres ist zudem das Batteriefach an dem hinteren Ende des hinteren Teleskoprohres angelenkt und von einer das hintere Teleskoprohr überdeckenden Transportstellung in eine das hintere Teleskoprohr verlängernde, lösbar fixierende Arbeitsstellung und umgekehrt verschwenkbar. Dazu ist das Batteriefach über ein Schwenkgelenk, das vorzugsweise eine ent-/verriegelbare Arretiereinrichtung aufweist, mit dem hinteren Teleskoprohr schwenkbeweglich verbunden. Es kann von der das Teleskoptragrohr verlängernden Arbeitsstellung, in der es zum Balanceausgleich des tragbaren Suchgerätes wesentlich beiträgt, einfach in die Transportstellung überführt werden, indem das Batteriefach um 180° in Richtung des vorderen Endes des Teleskoptragrohres geschwenkt wird. In der Transportstellung erstreckt sich das längliche Batteriefach, das vorzugsweise rohrförmig ausgebildet ist, parallel entlang dem Teleskoptragrohr und überdeckt bei in das vordere Teleskoprohr eingeschobenen hinterem Teleskoprohr das vordere und das hintere Teleskoprohr gleichermaßen.

Für den Transport des tragbaren Suchgerätes ist es üblich, auch die stabförmige Magnetfeldsonde, die beispielsweise über ein Gabelgelenk mit dem Teleskoptragrohr verbunden ist, vollständig gegen das Trag-/Führungsrohr, in diesem Fall gegen das vordere Teleskoprohr zu schwenken, bis es sich zu diesem parallel erstreckt. Das Batteriefach wird vorzugsweise in die entgegengesetzte Richtung verschwenkt, so dass es sich in der Transportstellung auf der anderen Seite des Teleskoptragrohres der Magnetfeldsonde gegenüberliegend befindet und dort parallel zu dem vorderen Teleskoprohr verläuft. Das zusammengeschobene Teleskoptragrohr befindet sich damit zwischen der Magnetfeldsonde und dem Batteriefach. Prinzipiell kann das Batteriefach auch in die entgegengesetzte Richtung, d.h. zu der Magnetfeldsonde hin geschwenkt werden, wenn das das Batteriefach und das hintere Teleskoprohr verbindende Schwenkgelenk geeignet ausgebildet ist.

Vorzugsweise ist bei dem erfindungsgemäßen Suchgerät der Traggriff und die Halterung, die an dem Trag-/Führungsrohr angeordnet sind, zu einer Führungseinheit zusammengefasst, die an dem vorderen Teleskoprohr angeordnet, dort axial verschiebbar geführt und vorzugsweise in beliebiger Position auf dem vorderen Teleskoprohr fixierbar ist. Die Führungseinheit kann somit auf dem Teleskoptragrohr in eine ergonomisch günstige Arbeitsposition verschoben werden, in der sich der Schwerpunkt des tragbaren Suchgerätes befindet, so dass ein vollständiger Balanceausgleich herbeiführbar ist. Die Lage des Schwerpunktes wird dabei im Wesentlichen durch die Länge des Teleskoptragrohrs, das Gewicht der Magnetfeldsonde und das Gewicht sowie der Anordnung des Batteriefaches bestimmt.

Bei einer bevorzugten Ausführungsform der Erfindung weist die am Trag-/Führungsrohr angeordnete Halterung einen elektrischen Steckverbinder für die kabellos abnehmbare/aufsteckbare Elektronikeinheit auf, von dem aus eine in den Teleskoprohren aufgenommene Verkabelung zu der Magnetfeldsonde und dem Batteriefach führt. Dies ermöglicht eine einfache und schnelle Montage bzw. Demontage der Elektronikeinheit sowie eine dauerhaft sichere elektrische Kontaktierung. Die im Teleskoptragrohr verlegte Verkabelung ist vor Beschädigung geschützt und bei der Benutzung des erfindungsgemäßen Suchgerätes nicht hinderlich. Natürlich kann die Verkabelung auch außerhalb des Teleskoptragrohres geführt sein. Die abnehmbar aufsteckbare Elektronikeinheit kann beim Transport an dem Trag-/Führungsrohr verbleiben, wenn die Führungseinheit an dem vorderen Teleskoprohr bis an das vordere Ende des Trag-/Führungsrohrs verschoben wird. Mit den an der Halterung vorgesehenen Haltemitteln für die abnehmbare Elektronikeinheit wird die Elektronikeinheit zusätzlich zu der Fixierung über den elektrischen Steckverbinder nochmals mechanisch sicher lösbar fixiert. Die Haltemittel der Führungseinheit wirken mit an der Elektronikeinheit vorgesehenen Gegenhaltemitteln zusammen. Für ein bequemes Abnehmen bzw. Aufstecken der Elektronikeinheit von/auf die Halterung können die Haltemittel und die Gegenhaltemittel beispielsweise als Rastelemente für eine Rastverbindung ausgebildet sein.

Bei einer begünstigten Ausführungsform der Erfindung ist an dem vorderen Ende des vorderen Teleskoprohres ein schwenkbewegliches Sondenaufnahmerohr angeordnet, das die Magnetfeldsonde verschiebbar und lösbar spannend aufnimmt. Dies ermöglicht, die Magnetfeldsonde für den Transport zumindest teilweise in das Sondenaufnahmerohr einzuschieben, so dass die Magnetfeldsonde in der Transportstellung nicht über das hintere Ende des zusammengeschobenen Teleskoptragrohres hinausragt. Damit wird in Verbindung mit dem in die Transportstellung geschwenkten Batteriefach eine kompakte und somit einfach zu transportierende Anordnung der Komponenten des tragbaren Suchgerätes erreicht.

Bei einer Ausführungsform weist das Modulgehäuse ein ein Bedienfeld mit Bedienelementen und mit Leuchtanzeigeelementen auf, die neben dem Freifeld angeordnet sind. Das Freifeld weist vorzugsweise randnah zu dem Bedienfeld angeordnete Bildschirmstützelemente auf, an denen sich der Bildschirm in der Nichtgebrauchsstellung abstützen kann. In der Nichtgebrauchsstellung sind somit die Anzeigemittel des Bildschirms beispielsweise beim Transport der Elektronikeinheit bzw. des Suchgerätes sicher vor Beschädigung und Verschmutzung geschützt. Günstigerweise erstrecken sich bei einer vorteilhaften Ausführungsform der Erfindung das Freifeld und das Bedienfeld direkt nebeneinander, wobei die Bedienelemente des Bedienfeldes auch bei an dem Freifeld in Anlage befindlichem Bildschirm nicht abgedeckt und so bedienbar sind. Dazu weist das Freifeld mindestens eine dem Bildschirm entsprechende Größe auf.

Nachfolgend wird die Erfindung anhand eines Ausführungsbeispieles näher erläutert. Weitere Merkmale der Erfindung ergeben sich aus der folgenden Beschreibung des Ausführungsbeispiels zusammen mit den Patentansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: ein erfindungsgemäßes tragbares Suchgerät mit einem Teleskoptragrohr, einer Elektronikeinheit und einer stabförmigen Magnetfeldsonde im Betriebszustand, mit vollständig auseinandergezogenen Teleskoprohren (Fig. 1a), mit teilweise ineinandergeschobenen Teleskoprohren (Fig. 1b) und mit verschobener Führungseinheit (Fig. 1c);
- Figur 2: das Suchgerät aus Figur 1 zusammengefaltet;
- Figur 3: die Elektronikeinheit aus Figur 1, mit klappbarem Bildschirm in der Gebrauchsstellung (Fig. 3a) und in der Nichtgebrauchsstellung (Fig. 3b); und
- Figur 4: die Elektronikeinheit aus Figur 3 mit Blick auf die Vorderseite (Fig. 4a) und auf die Rückseite (Fig. 4b);

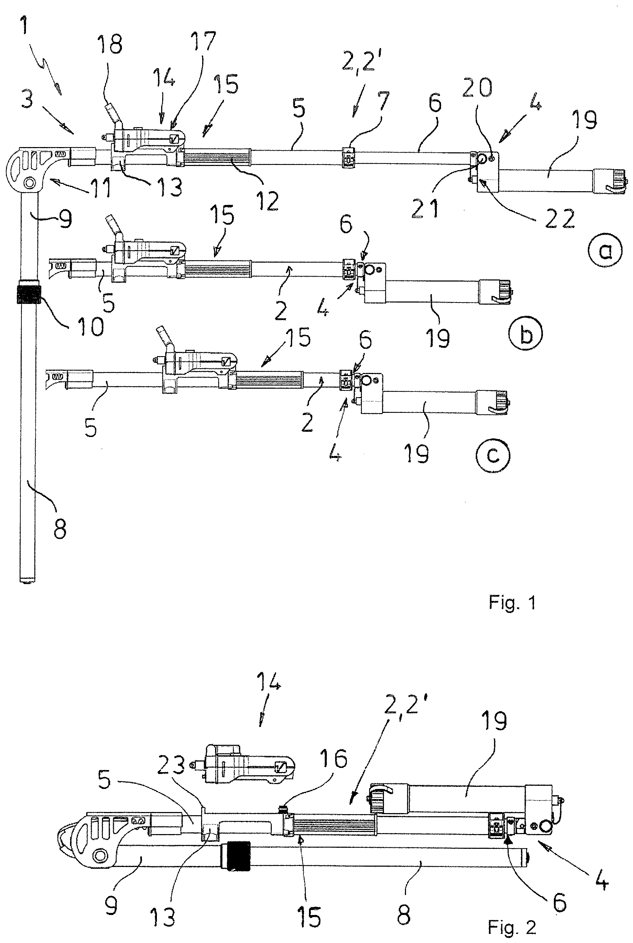

Die Figur 1 zeigt ein erfindungsgemäßes Suchgerät 1 in der Gebrauchsstellung. Das Suchgerät 1 weist als Trag-/Führungsrohr (2) ein Teleskoptragrohr 2' mit einem vorderen Ende 3 und einem hinteren Ende 4 auf. Es umfasst ein vorderes Teleskoprohr 5 und ein hinteres Teleskoprohr 6, die ineinander längsverschiebbar und mittels einer Rohrspanneinrichtung 7 lösbar aneinander festlegbar sind. An dem vorderen Ende 3 des Teleskoptragrohres 2' ist eine stabförmige Magnetfeldsonde 8 schwenkbar befestigt. Diese ist an einem Sondenaufnahmerohr 9 angeordnet, in das sie teilweise einschiebbar und an dem sie über eine Sondenspanneinrichtung 10 lösbar fixierbar ist. Das Sondenaufnahmerohr 9 ist über ein Gabelgelenk 11 mit dem vorderen Teleskoprohr 5 gelenkig, insbesondere pendelfähig verbunden.

Auf dem vorderen Teleskoprohr 3 ist ein Traggriff 12 zum Führen des Suchgerätes 1 und eine Halterung 13 für eine aufsteckbare Elektronikeinheit 14 angeordnet, die zu einer Führungseinheit 15 des Teleskoptragrohres 2' zusammengefasst sind. Die Führungseinheit 15 ist von dem vorderen Ende 3 des Teleskoptragrohres 2' in Richtung der Rohrspanneinrichtung 7 und umgekehrt verschiebbar. Sie ist über in der Zeichnung nicht dargestellte Fixiermittel in beliebiger Position auf dem vorderen Teleskoprohr 5 arretierbar. Die Halterung 13 trägt die abnehmbare und aufsteckbare Elektronikeinheit 14, die kabellos mit der Halterung 13 elektrisch verbunden ist. Dazu weist die Halterung 13 einen in der Figur 2 sichtbaren elektrischen Steckverbinder 16 auf, der die Elektronikeinheit 14 zudem mechanisch fixiert. Die Elektronikeinheit 14 weist in dem dargestellten Ausführungsbeispiel ein Bedienfeld 17 mit nicht dargestellten Bedienelementen und einen Klappbildschirm 18 mit einem grafikfähigen Display oder einer Anzahl von LED-Anzeigeelementen oder Leuchtdioden zur Visualisierung von Messwerten auf.

An dem hinteren Ende 4 des Teleskoptragrohres 2' ist ein Batteriefach 19 angeordnet, das an dem hinteren Teleskoprohr 6 angelenkt ist. Dazu ist ein Schwenkgelenk 20 vorgesehen, mittels dem das Batteriefach 19 von einer das hintere Teleskoprohr 6 überdeckenden Transportstellung in eine das hintere Teleskoprohr 6 verlängernde Arbeitsstellung und umgekehrt verschwenkbar ist. Zur Fixierung in der in Figur 1 dargestellten Arbeitsstellung ist eine lösbar fixierende Arretiereinrichtung 21 vorgesehen. Das Batteriefach 19 weist zudem eine Steckkupplung 22 für den Anschluss einer externen Spannungsversorgung auf. In dem Teleskoptragrohr 2 ist durch die Teleskoprohre 5, 6 eine in der Zeichnung nicht sichtbare Verkabelung von dem Batteriefach 19 bzw. von dem Sondenaufnahmerohr 9 zu dem elektrischen Steckverbinder 16 an der Führungseinheit 15 geführt. Die Führungseinheit 15 weist an der Halterung 13 beabstandet von dem Steckverbinder 16 noch zusätzliche lösbare Haltemittel 23 auf, die die Elektronikeinheit 14 zusätzlich mechanisch halten.

Die Figur 1a zeigt das Teleskoptragrohr 2' vollständig auseinandergezogen, wobei das Batteriefach 19 das hintere Teleskoprohr 6 axial verlängert und das Sondenaufnahmerohr 9 mit der daran befestigten Magnetfeldsonde 8 senkrecht von dem Teleskoptragrohr 2' absteht. Die Figur 1b zeigt das Suchgerät 1 mit verkürztem Teleskoptragrohr 2', das heißt mit teilweise ineinandergeschobenen Teleskoprohren 5, 6 ansonsten gegenüber Figur 1a unverändert. Bei den Figuren 1a, 1b ist die Führungseinheit 15 nahe dem vorderen Ende 3 des Teleskoptragrohres 2' angeordnet. Die Figur 1c zeigt das Suchgerät 1 mit verkürztem Teleskoptragrohr 2' und mit in Richtung des Batteriefaches 9 verschobener Führungseinheit 15.

In der Figur 2 ist das in der Figur 1 dargestellte erfindungsgemäße tragbare Suchgerät 1 zusammengefaltet dargestellt. Die Elektronikeinheit 14 ist von der Halterung 13 der Führungseinheit 15 abgenommen. Das Sondenaufnahmerohr 9 mit der Magnetfeldsonde 8 sowie das Batteriefach 19 sind in Richtung des Teleskoptragrohres 2' verschwenkt. Das Batteriefach 19 überdeckt das hintere und vordere Teleskoprohr 5, 6 und erstreckt sich parallel zu dem Teleskoptragrohr 2'. Die Magnetfeldsonde 8 ist teilweise in das Sondenaufnahmerohr 9 eingeschoben und erstreckt sich ebenfalls parallel zu dem Teleskoptragrohr 2'. Auf diese Weise überragt die Magnetfeldsonde 8 das hintere Ende 4 des Teleskoptragrohres 2' nicht. Das Batteriefach 19 sowie das Sondenaufnahmerohr 9 mit der Magnetfeldsonde 8 befinden sich in der Transportstellung auf unterschiedlichen Längsseiten des Teleskoptragrohres 2'.

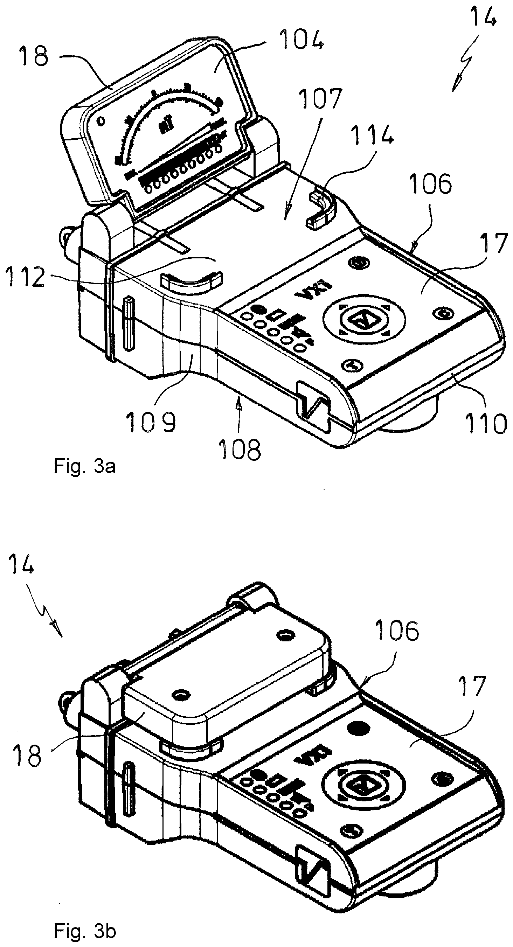

Die Figur 3 zeigt ein Ausführungsbeispiel der Elektronikeinheit 14, die die Messwerte einer in den Figuren 1, 2 dargestellten Magnetfeldsonde 8 verarbeitet und über Anzeigemittel 104, beispielsweise ein Display 104, für den Benutzer visualisiert. Das Display 104 ist Teil eines klappbaren Bildschirms 18, der mit einem Modulgehäuse 106 der Elektronikeinheit 14 gelenkig verbunden ist. Die Elektronikeinheit 14 ist von einer in der Figur 3b dargestellten Nichtgebrauchsstellung, in der die Anzeigeseite des Bildschirms 18, d. h. das Display 104 an dem Modulgehäuse 106 flach anliegt, in eine in der Figur 3a abgebildete Gebrauchsstellung, in der die Anzeigeseite des Bildschirms 18 mit dem Display 104 sichtbar ist und sich rückwärts geneigt zum Modulgehäuse 106 erstreckt, und umgekehrt, verschwenkbar.

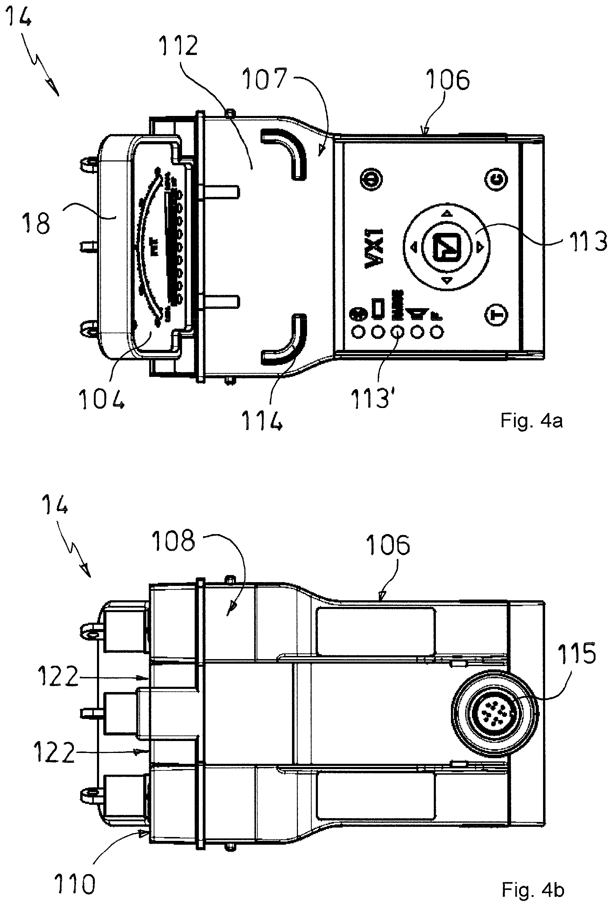

Das Modulgehäuse 106 weist eine Vorderseite 107 und eine Rückseite 108 auf. Von der Vorderseite 107 zu der Rückseite 108 erstrecken sich Längsseitenflanken 109 und Querseitenflanken 110 des Modulgehäuses 106. Wie der Figur 4a zu entnehmen ist, weist das Modulgehäuse 106 eine Vorderseite 107 mit einem Bedienfeld 17 und einem Freifeld 112 auf. An dem Bedienfeld 17 sind Bedienelemente 113 vorgesehen, die als Mehrfachwipptasten ausgebildet sind. Neben den Wipptasten 113 sind mehrere Leuchtanzeigeelemente 113' in einer Reihe angeordnet. Das Freifeld 112, das an das Bedienfeld 17 angrenzt, bietet Raum für den klappbaren Bildschirms 18 in der Nichtgebrauchsstellung, in der sich das Display 104 nahe der Vorderseite 107 verdeckt erstreckt, ohne dass der Bildschirm 18 das Bedienfeld 17 übergreift. Das Freifeld 112 ist eben ausgebildet und trägt zwei an die Form des Bildschirms 18 angepasste Bildschirmstützelemente 114, auf denen sich der Bildschirm 18 in der Nichtgebrauchsstellung abstützt. Die Bildschirmstützelemente 114 sind randnah am Freifeld 112 nahe dem Bedienfeld 17 angeordnet. Die Bedienelemente 113 sind sowohl bei zu- wie auch bei aufgeklapptem Bildschirm 18 jederzeit bedien- und die Leuchtanzeigeelemente 113' sichtbar.

Wie die Figur 4b zeigt, sind auf der Rückseite 108 des Modulgehäuses 106 elektrische Anschlüsse vorgesehen, die zu einem elektrischen Steckverbinder 115 zusammengefasst sind. Der Steckverbinder 115 koppelt beim Einsetzen der Elektronikeinheit 14 in die in den Figuren 1, 2 gezeigte Halterung 13 automatisch mit einem in die Halterung 13 integrierten Gegensteckverbinder 16. Das Modulgehäuse 106 weist außerdem an der hinteren Querseitenflanke 110 Befestigungsmittel 122 auf, die mit Haltemitteln 23 der Halterung 13 zusammenwirken und die Elektronikeinheit 14 zusätzlich zu dem elektrischen Steckverbinder 115 mechanisch sicher an der Halterung 13 lösbar fixieren.

## Patentansprüche

1. Tragbares Suchgerät (1) zur Detektion von Magnetfeld beeinflussenden Objekten, mit einer Magnetfeldsonde (8) und einer Elektronikeinheit (14), die die Messwerte der Magnetfeldsonde (8) verarbeitet sowie zumindest optisch und/oder akustisch anzeigt, und mit einem Trag-/Führungsrohr (2), mit einem vorderen Ende (3), an dem die Magnetfeldsonde (8) schwenkbar befestigt oder befestigbar ist, mit einem hinteren Ende (4), an dem ein Batteriefach (19) angeordnet ist, mit einem Traggriff (12) zum Führen des Trag-/Führungsrohres (2) und mit einer Halterung (13) für die Elektronikeinheit (14), wobei das Trag-/Führungsrohr (2) mehrstückig als Teleskoptragrohr (2') ausgebildet ist und mindestens ein vorderes Teleskoprohr (5) und ein hinteres Teleskoprohr (6) aufweist, die ineinander schiebbar und mittels einer Rohrspanneinrichtung (7) aneinander festlegbar sind, **dadurch gekennzeichnet, dass**
• die Magnetfeldsonde (8) stabförmig ausgebildet ist, und
• das Trag-/Führungsrohrrohr (2) eine kabellose abnehmbare/aufsteckbare Elektronikeinheit (14) trägt, wobei
• die Elektronikeinheit (14) einen Bildschirm (18) mit Anzeigemitteln (104) aufweist, der gelenkig mit einem Modulgehäuse (106) der Elektronikeinheit (14) verbunden ist, und von einer Nichtgebrauchsstellung, in der die Anzeigeseite des Bildschirms (18) an dem Modulgehäuse (106) flach anliegt, in eine Gebrauchsstellung, in der die Anzeigeseite des Bildschirms (18) sichtbar ist und sich rückwärts geneigt weg von dem Modulgehäuse (106) erstreckt, und umgekehrt, verschwenkbar ist, wobei
• das Modulgehäuse (106) der Elektronikeinheit (14) eine Vorderseite (107) aufweist, die ein Bedienfeld (17) mit Bedienelementen (113) und ein Freifeld (112) zur Aufnahme des klappbaren Bildschirms (18) in der Nichtgebrauchsstellung umfasst, wobei sich das Freifeld (112) direkt neben dem Bedienfeld (17) erstreckt und mindestens eine dem Bildschirm (18) entsprechende Größe aufweist, so dass die Bedienelemente (113) des Bedienfeldes (17) auch bei an dem Freifeld (112) in Anlage befindlichem Bildschirm (18) nicht abgedeckt sind,
• das Modulgehäuse (106) der Elektronikeinheit (14) eine Rückseite (108) aufweist, an der die elektrischen Anschlüsse zu einem Steckverbinder (115) zusammengefasst angeordnet sind, und
• das Modulgehäuse (106) der Elektronikeinheit (14) Seitenflanken (110) aufweist, an denen Befestigungsmitteln (122) für die Halterung (13) angeordnet sind,
• dass die Halterung (13) des Trag-/Führungsrohrs (2) den Befestigungsmitteln (122) der Elektronikeinheit (14) zugeordnete Haltemittel (23) und einen dem elektrischen Steckverbinder (115) der Elektronikeinheit (14) zugeordneten elektrischen Gegensteckverbinder (16) aufweist,
• und dass die Elektronikeinheit (14) beim Einsetzen in die Halterung (13) automatisch mit der Halterung mechanisch und elektrisch koppelbar ist, wobei
• der Steckverbinder (115) der Elektronikeinheit (14) mit dem Gegensteckverbinder (16) der Halterung (13) lösbar koppelt, und
• die Befestigungsmittel (122) der Elektronikeinheit (14) mit den Haltemitteln (23) der Halterung (13) lösbar koppeln.

2. Tragbares Suchgerät nach Anspruch 1, **dadurch gekennzeichnet, dass** das Batteriefach (19) an dem hinteren Ende (4) des hinteren Teleskoprohres (6) angelenkt und von einer das hintere Teleskoprohr (6) überdeckenden Transportstellung in eine das hintere Teleskoprohr (6) verlängernde, lösbar fixierende Arbeitsstellung und umgekehrt verschwenkbar ist.

3. Tragbares Suchgerät nach Anspruch 1 oder 2, **dadurch gekennzeichnet, dass** der Traggriff (12) und die Halterung (13) zu einer Führungseinheit (15) zusammengefasst sind, die auf dem vorderen Teleskoprohr (5) axial verschiebbar und fixierbar ist.

4. Tragbares Suchgerät nach einem der vorstehenden Ansprüche, **dadurch gekennzeichnet, dass** von dem elektrischen Gegensteckverbinder (16) für die kabellose abnehmbare/aufsteckbare Elektronikeinheit (14) aus eine in den Teleskoprohren aufgenommene Verkabelung zu der Magnetfeldsonde (8) und dem Batteriefach (19) führt.

5. Tragbares Suchgerät nach einem der vorstehenden Ansprüche, **dadurch gekennzeichnet, dass** an dem vorderen Ende (3) des vorderen Teleskoprohres (5) ein schwenkbewegliches Sondenaufnahmerohr (9) angeordnet ist, das die Magnetfeldsonde (8) verschiebbar und lösbar spannend aufnimmt.

## Claims

1. Portable detection device (1) for detecting objects that influence a magnetic field, said device comprising a magnetic field probe (8) and an electronics unit (14) which processes the measured values of the magnetic field probe (8) and indicates said values at least visually and/or acoustically, said device also comprising a support/guide tube (2) having a front end (3), to which the magnetic field probe (8) is or can be pivotably fastened, having a rear end (4), on which a battery compartment (19) is arranged, having a handle (12) for guiding the support/guide tube (2), and having a mount (13) for the electronics unit (14), the support/guide tube (2) being formed in multiple parts, as a telescopic support tube (2'), and comprising at least one front telescopic tube (5) and a rear telescopic tube (6) which can be pushed into one another and can be secured to one another by means of a tube clamping device (7), **characterised in that**
• the magnetic field probe (8) is rod-shaped, and
• the support/guide tube (2) supports a cordless, removable/attachable electronics unit (14),
• the electronics unit (14) comprises a screen (18) having display means (104), which screen is articulated to a modular housing (106) of the electronics unit (14) and can be pivoted from a non-use position, in which the display side of the screen (18) rests flat against the modular housing (106), into a use position, in which the display side of the screen (18) is visible and extends, tilted backwards, away from the modular housing (106), and vice versa,
• the modular housing (106) of the electronics unit (14) comprising a front side (107) that has a control panel (17) comprising control elements (113), and a free space (112) for receiving the hinged screen (18) in the non-use position, the free space (112) extending directly adjacently to the control panel (17) and having a size that at least corresponds to the screen (18), such that the control elements (113) of the control panel (17) are not covered, even when the screen (18) is in contact with the free space (112),
• the modular housing (106) of the electronics unit (14) comprising a rear side (108) on which the electrical connections are grouped together to form a plug connector (115), and
• the modular housing (106) of the electronics unit (14) comprising side flanks (110) on which fastening means (122) for the mount (13) are arranged,
• **in that** the mount (13) of the support/guide tube (2) comprises mounting means (23) that are associated with the fastening means (122) of the electronics unit (14), and an electrical mating plug connector (16) that is associated with the electrical plug connector (115) of the electronics unit (14),
• and **in that**, when the electronics unit (14) is inserted into the mount (13), said unit can be automatically mechanically and electrically coupled to the mount,
• the plug connector (115) of the electronics unit (14) being detachably coupled to the mating plug connector (16) of the mount (13), and
• the fastening means (122) of the electronics unit (14) being detachably coupled to the mounting means (23) of the mount (13).

2. Portable detection device according to claim 1, **characterised in that** the battery compartment (19) is hinged to the rear end (4) of the rear telescopic tube (6) and can be pivoted from a transport position, which covers the rear telescopic tube (6), into a detachably fixing working position which extends the rear telescopic tube (6), and vice versa.

3. Portable detection device according to either claim 1 or claim 2, **characterised in that** the handle (12) and the mount (13) are combined to form a guide unit (15) which can be axially moved and fixed on the front telescopic tube (5).

4. Portable detection device according to any of the preceding claims, **characterised in that** wiring, which is received in the telescopic tubes, leads from the electrical mating plug connector (16) for the cordless, removable/attachable electronics unit (14) to the magnetic field probe (8) and the battery compartment (19).

5. Portable detection device according to any of the preceding claims, **characterised in that** a pivotable probe-receiving tube (9) is arranged at the front end (3) of the front telescopic tube (5), which probe-receiving tube receives the magnetic field probe (8) such that said probe is moveable and detachably clamped.

## Revendications

1. Appareil de recherche portable (1) pour la détection d'objets influençant le champ magnétique, avec une sonde de champ magnétique (8) et avec une unité électronique (14) qui traite les valeurs de mesure de la sonde de champ magnétique (8) et les affiche au moins optiquement et/ou acoustiquement, et avec un tube (2) porteur et de guidage, doté d'une extrémité avant (3) où est ou peut être fixée à pivotement la sonde de champ magnétique (8), d'une extrémité arrière (4) où est disposé un compartiment de batterie (19), d'une poignée (12) pour diriger le tube (2) porteur et de guidage et d'un dispositif de maintien (13) pour l'unité électronique (14), sachant que le tube (2) porteur et de guidage est réalisé en plusieurs parties sous forme de tube porteur télescopique (2') et présente au moins un tube télescopique avant (5) et un tube télescopique arrière (6), qui peuvent être enfilés l'un dans l'autre et immobilisés l'un contre l'autre au moyen d'un dispositif (7) de serrage de tubes, **caractérisé**
- **en ce que** la sonde de champ magnétique (8) est réalisée en forme de tige,
- et le tube (2) porteur et de guidage porte une unité électronique (14) attachable et détachable sans fil,
- sachant que l'unité électronique (14) présente un écran (18) doté de moyens d'affichage (104), qui est relié de manière articulée à un boîtier de module (106) de l'unité électronique (14), et qui peut être pivoté d'une position de non-utilisation, dans laquelle le côté d'affichage de l'écran (18) s'applique à plat contre le boîtier de module (106), dans une position d'utilisation dans laquelle le côté d'affichage de l'écran (18) est visible et s'étend en s'éloignant du boîtier de module (106) en inclinaison vers l'arrière, et vice-versa,
- sachant que le boîtier de module (106) de l'unité électronique (14) présente un côté avant (107), qui comprend un panneau de commande (17) doté d'éléments de commande (113) et un panneau libre (112) destiné à recevoir l'écran rabattable (18) dans la position de non-utilisation, sachant que le panneau libre (112) s'étend directement auprès du panneau de commande (17) et présente au moins une taille correspondant à l'écran (18), de sorte que les éléments de commande (113) du panneau de commande (17) ne sont pas recouverts même lorsque l'écran (18) se trouve en application contre le panneau libre (112),
- que le boîtier de module (106) de l'unité électronique (14) présente un côté arrière (108), sur lequel sont disposées les connexions électriques regroupées en un connecteur (115),
et que le boîtier de module (106) de l'unité électronique (14) présente des flancs latéraux (110), sur lesquels sont disposés des moyens de fixation (122) pour le dispositif de maintien (13),
- **en ce que** le dispositif de maintien (13) du tube (2) porteur et de guidage présente des moyens de maintien (23) associés aux moyens de fixation (122) de l'unité électronique (14), et un connecteur électrique complémentaire (16) associé au connecteur électrique (115) de l'unité électronique (14),
- et **en ce que** l'unité électronique (14) peut, lorsqu'elle est insérée dans le dispositif de maintien (13), être automatiquement accouplée mécaniquement et électriquement au dispositif de maintien,
- sachant que le connecteur (115) de l'unité électronique (14) s'accouple de manière amovible au connecteur complémentaire (16) du dispositif de maintien (13),
- et que les moyens de fixation (122) de l'unité électronique (14) s'accouplent de manière amovible aux moyens de maintien (23) du dispositif de maintien (13).

2. Appareil de recherche portable selon la revendication 1, **caractérisé en ce que** le compartiment de batterie (19) est articulé à l'extrémité arrière (4) du tube télescopique arrière (6) et peut être pivoté d'une position de transport, recouvrant le tube télescopique arrière (6), dans une position de travail rallongeant et immobilisant de manière amovible le tube télescopique arrière (6), et vice-versa.

3. Appareil de recherche portable selon la revendication 1 ou 2, **caractérisé en ce que** la poignée (12) et le dispositif de maintien (13) sont réunis en une unité de guidage (15) qui peut coulisser axialement et être immobilisée sur le tube télescopique avant (5).

4. Appareil de recherche portable selon l'une des revendications précédentes, **caractérisé en ce qu'**un câblage reçu dans les tubes télescopiques mène du connecteur électrique complémentaire (16) pour l'unité électronique (14) attachable et détachable sans fil à la sonde de champ magnétique (8) et au compartiment de batterie (19).

5. Appareil de recherche portable selon l'une des revendications précédentes, **caractérisé en ce qu'**un tube récepteur de sonde (9) mobile en pivotement est disposé à l'extrémité avant (3) du tube télescopique avant (5) et reçoit la sonde de champ magnétique (8) avec possibilité de coulissement et de serrage amovible.
